# EUROPEAN PATENT SPECIFICATION

(11) **EP 2 375 083 B1**
(45) Date of publication and mention of the grant of the patent: **20.08.2014**
(21) Application number: 11159843.9
(22) Date of filing: 25.03.2011
(51) Int. Cl.: F15B 13/043, F01M 1/16, F16K 17/10, F15B 13/02

(54) **Relief valve**
Druckbegrenzungsventil
Soupape de décharge

(30) Priority: 07.04.2010 JP 2010088864
(43) Date of publication of application: 12.10.2011
(73) Proprietor: AISIN SEIKI KABUSHIKI KAISHA, Aichi-ken 448-8650 (JP); TOYOTA JIDOSHA KABUSHIKI KAISHA, Toyota-shi, Aichi-ken, 471-8571 (JP)
(72) Inventor: Isoda, Atsuo, Kariya-shi Aichi-ken 448-8650 (JP); Inoue, Yuta, Kariya-shi Aichi-ken 448-8650 (JP); Terada, Mitsuru, Kariya-shi Aichi-ken 448-8650 (JP); Takahashi, Katsuaki, Toyota-shi Aichi-ken 471-8571 (JP)
(74) Representative: Kramer - Barske - Schmidtchen

(56) References cited:
- DE-A1- 19 501 683
- DE-U1- 8 301 984
- US-A- 3 896 844
- US-A- 3 980 095

## Description

### TECHNICAL FIELD

This disclosure relates to a relief valve. More specifically, this disclosure pertains to the relief valve, which is configured so that a relief pressure used for adjusting a hydraulic pressure of an engine lubrication system is adjustable.

### BACKGROUND DISCUSSION

Generally, a relief valve is configured so as to open a relief passage, which is formed within an inside of the relief valve and through which an excessive oil is discharged, in a case where a pressure of a hydraulic circuit becomes equal to or greater than a set pressure, in order to control an increase of the pressure of the hydraulic circuit. For example, a relief valve disclosed in Koukai Gihou 2006-505946 (non patent document issued in Japan) includes a body, a valve, a spring, a retainer, a plug, a fluid passage, through which an oil is allowed to flow into a clearance formed between the retainer and the plug, and a back pressure control valve, which is configured so as to control an inflow of the oil. According to the relief valve disclosed in Koukai Gihou 2006-505946, in a case where the oil is not allowed to flow into the clearance between the retainer and the plug, the retainer is positioned so as to correspond to a position of a plug end surface, so that a length of the spring is elongated. As a result, a valve opening pressure is set to be low. On the other hand, in a case where the oil is allowed to flow into the clearance formed between the retainer and the plug, the retainer is displaced in an upward direction so as to compress the spring. As a result, the valve opening pressure is set to be high.

Generally, a malfunction may occur at an adjustment of the valve opening pressure corresponding to a driving state. In this case, an operation state of the relief valve is retained in either one of a low pressure operation state and a high pressure operation state, so that the operation state of the relief valve is not changeable to the other one of the low pressure operation state and the high pressure operation state. According to the relief valve disclosed in Koukai Gihou 2006-505946, in a case where the back pressure control valve is clogged because of a sludge contained in the oil and the like, the oil may not be allowed to flow into the clearance formed between the retainer and the plug, so that the valve opening pressure is maintained to be low. As a result, the oil may not be discharged to a drain because the valve opening pressure is low even when an engine rotates at a high speed, which may further result in causing a seizure of the engine because the oil is not supplied to each component of the engine.

A need thus exists to provide a relief valve, which is configured so that a fluid is suppliable to an internal combustion engine even in a case where a malfunction occurs at a back pressure control valve.

### SUMMARY

According to an aspect of this disclosure, a relief valve includes a valve body having a first port, through which a fluid flowing through a first passage flows into the relief valve, and a second port, through which the fluid is discharged from the relief valve, a sleeve formed in a cylinder shape, configured so as to be slidably movable within the valve body and having an inflow port, which is in communication with the first port, and a discharge port, which is in communication with the second port, a valve configured so as to be slidably movable within the sleeve while receiving a pressure of the fluid via the inflow port and establishing a closed state, where the valve is positioned closer to the inflow port so as to close the discharge port, and an open state, where the valve is positioned away from the inflow port so as to open the discharge port, a biasing member applying a biasing force to the valve in a direction resisting against a fluid pressure applied from the first port, a state switching mechanism being switched between a first state, where the fluid pressure applied from the first port acts on the sleeve in the same direction as a direction where the biasing force is generated, and a second state, where a communication between a second passage, which is formed at a portion of the valve body so as to be positioned opposite from the first port of the sleeve relative to the sleeve and the valve in a longitudinal direction thereof, and a drain passage is established, and a valve provided at the drain passage in order not to allow the fluid to flow back from the drain passage while the state switching mechanism is in the second state.

Accordingly, the relief valve according to this disclosure is configured so as to change a position of the sleeve relative to the valve body in a manner where the state switching mechanism is switched between the first state where the fluid pressure applied from the first port acts on the sleeve in the same direction as the direction where the biasing force of the biasing member is generated and the second state where the communication between the second passage and the drain passage is established. In other words, while the first state is established at the state switching mechanism, the fluid pressure applied from the first port acts on the sleeve also in the direction resisting against the fluid pressure from the first port, thereby displacing the sleeve towards the first port. On the other hand, while the second state is established at the state switching mechanism, the sleeve receives only the fluid pressure applied from the first port and the communication between the second passage and the drain passage is established. Therefore, the sleeve is displaced away from the first port to the second port.

While the state switching mechanism is in the first state, a position of the discharge port, which is in communication with the second port, is also displaced towards the first port in response to a displacement of the sleeve towards the first port. In this case, the valve is also displaced towards the first port together with the sleeve, so that the biasing member of the valve is turned to be in a stretched state. Accordingly, even if the fluid pressure within the first passage is low, the biasing member biasing the valve towards the first port is pushed back in a direction opposite to the first port, so that the valve opens the discharge port of the sleeve. As a result, a communication is established between the first port and the second port within the sleeve, so that an excessive fluid remaining within the first passage is discharged. In other words, in this case, a valve opening pressure of the relief valve is set to be low.

While the state switching mechanism is in the second state, the position of the discharge port is also displaced away from the first port in response to the displacement of the sleeve towards the second port. Furthermore, the valve is also displaced towards the second port together with the sleeve, so that the biasing member of the valve is turned to be in a compressed state. Accordingly, while a hydraulic pressure within the first passage is low, the biasing member biasing the valve towards the first port is not pushed back in the direction opposite to the first port. On the other hand, in the case where the hydraulic pressure within the first passage becomes high, the biasing member biasing the valve towards the first port is pushed back in the direction opposite to the first port, so that the discharge port is opened. As a result, the communication between the first port and the second port is established within the sleeve, so that the excessive fluid is discharged. In other words, in this case, the valve opening pressure of the relief valve is set to be high.

For example, in a case where the relief valve according to this disclosure is provided at a supply passage of an engine oil, the state switching mechanism is turned to be in the first state in a case where a temperature of the engine oil is low in order to act the fluid pressure applied from the first port on the sleeve in the direction resisting against the fluid pressure applied from the first port. Accordingly, the sleeve is displaced away from the second port to the first port, so that the valve opening pressure of the relief valve is set to be low. In a case where the valve is easily opened, the engine oil is more easily supplied to each portion of an internal combustion engine that needs the engine oil to be supplied. However, in a case where the internal combustion engine is driven so as to warm up the internal combustion engine, the engine oil does not need to be immediately supplied to, for example, a portion that cools down a piston, a cylinder and the like. Therefore, the internal combustion engine is effectively driven so as to warm up the internal combustion engine while controlling a supply load of the engine oil to be low.

Furthermore, even in a case where a rotation of the internal combustion engine is low (i.e. a low load), the state switching mechanism is switched to establish the first state in order to act the fluid pressure applied from the first port through the second passage to the sleeve in the direction resisting against the fluid pressure from the first port. Accordingly, the sleeve is displaced away from the second port to the first port, so that the valve opening pressure of the relief valve is set to be low. In other words, in a case where a number of engine rotations is low, a friction between components that configure the internal combustion engine is small and the engine oil may not need to be supplied to the components that generate the low friction. Therefore, in the case where the number of engine rotations is low, the engine oil is supplied to a predetermined portion of the internal combustion engine in order to, for example, reduce a friction generated at an oil pump, so that the internal combustion engine is effectively driven.

Furthermore, even if a malfunction occurs at the state switching mechanism because of a sludge an the like, that is mixed in the engine oil, so that the fluid pressure applied from the first port through the second passage does not act on the sleeve in the direction resisting against the fluid pressure applied directly from the first port on the sleeve, the relief valve is displaced away from the first port towards the second port while receiving the fluid pressure from the first port, so that the valve opening pressure of the relief valve is set to be high. Accordingly, while the fluid pressure within the supply passage is low, the valve is not allowed to push back the biasing member, which biases the valve towards the first port, in the direction opposite to the first port. In other words, the discharge port, which is configured so as to be turned to be in communication with the second port of the sleeve, remains closed. Therefore, the fluid is supplied to the internal combustion engine, so that a seizure of the internal combustion engine and the like may be preliminarily avoided.

In the case where the state switching mechanism is in the second state, in other words, in the case where the valve opening pressure of the relief valve is set to be high, the communication is established between the second passage and the drain passage. In this case, for example, if the number of engine rotations excessively increases or decreases so that a discharge pressure of the oil pump becomes instantaneously small, the sleeve may be pushed up by receiving the biasing force generated by the biasing member, which may result in flowing back the engine oil into the drain passage. As a result, an object, air and the like may be sucked in via the drain passage, which may further result in interfering an operation of the sleeve, the valve and the like.

However, according to the relief valve of this disclosure, the valve for preventing the flow back of the fluid from the drain passage while the second state is established at the state switching mechanism is provided at the drain passage. Therefore, while the second state is established at the state switching mechanism, the fluid is allowed to flow towards the drain passage from the state switching mechanism while the fluid is not allowed to flow towards the state switching mechanism from the drain passage. Accordingly, the object, the air and the like is surely avoided from entering from the drain passage, so that an optimal operation state of the sleeve, the valve and the like may be maintained.

US 3,980,095A discloses a relief valve, comprising a valve body having a first port, through which a fluid flowing through a first passage flows into the relief valve, and a second port, through which the fluid is discharged from the relief valve. Further, a sleeve formed in a cylinder shape is provided and configured so as to be slidably movable within the valve body and has an inflow port, which is in communication with the first port, and a discharge port, which is in communication with the second port. A valve is configured so as to be slidably movable within the sleeve while receiving a pressure of the fluid via the inflow port and establishing a closed state, where the valve is positioned closer to the inflow port so as to close the discharge port, and an open state, where the valve is positioned away from the inflow port so as to open the discharge port. A biasing member applies a biasing force to the valve in a direction resisting against the fluid pressure applied from the first port. The relief valve further comprises a state switching mechanism being switched between a first state, where the fluid pressure applied from the first port acts on the sleeve in the same direction as a direction where the biasing force is generated, and a second state, where a communication between a second passage, which is formed at a portion of the valve body so as to be positioned opposite from the first port of the sleeve relative to the sleeve in a valve in a longitudinal direction thereof, and a drain passage is established.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a diagram illustrating an operation state of a relief valve according to an embodiment in a case where a valve opening pressure is set to be low;
Fig. 2 is a diagram illustrating another operation state of the relief valve in the case where the valve opening pressure is set to be low;
Fig. 3 is a diagram illustrating an operation state of the relief valve in a case where the valve opening pressure is set to be high;
Fig. 4 is a diagram illustrating another operation state of the relief valve in the case where the valve opening pressure is set to be high;
Fig. 5 is a diagram illustrating a shape of a sleeve of the relief valve;
Fig. 6 is a diagram illustrating a relief valve according to a modified example of the embodiment; and
Figs 7A and 7B are diagrams illustrating operation states of a relief valve according to another modified example of the embodiment.

### DETAILED DESCRIPTION

An embodiment of a relief valve 1, which is configured so as to control a pressure applied to a supply passage 10 (a first passage) through which a fluid (i.e. an oil) is supplied to an internal combustion engine (i.e. an engine), is described below with reference to the attached drawings.

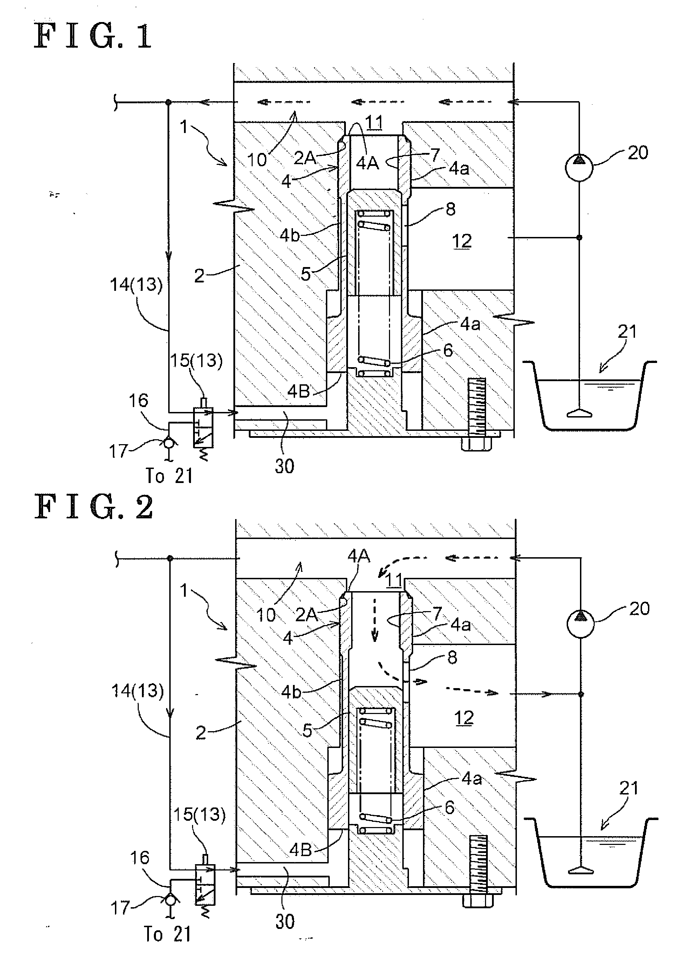

As illustrated in Figs. 1 to 4, the relief valve 1 is configured so as to suck the fluid (i.e. the oil) stored at an inside of an oil pan 21 by means of an oil pump 20 and discharge the oil to each portion that needs to be lubricated through the supply passage 10 while the engine is operated (i.e. an engine operating state). The relief valve 1 includes a valve body 2, a cylinder-shaped sleeve 4, a valve 5 and a biasing member 6 (e.g. a spring). The sleeve 4 is configured so as to slide within the valve body 2. The valve 5 is configured so as to slide within the sleeve 4. The biasing member 6 is configured so as to apply a biasing force to the valve 5. Additionally, the relief valve 1 is provided on the supply passage 10.

The valve body 2 includes a first port 11, through which the fluid is allowed to flow into the valve body 2, and a second port 12, through which the fluid is discharged from the valve body 2. The sleeve 4 includes an inflow port 7, which establishes a communication between an inside of the sleeve 4 and the first port 11, and a discharge port 8, which establishes a communication between the inside of the sleeve 4 and the second port 12 in response to an operation of the valve 5. The valve 5 is configured so as to slide within the sleeve 4 while receiving a pressure of the fluid (which will be hereinafter referred to as a fluid pressure) from the inflow port 7. More specifically, the valve 5 establishes a closed state where the valve 5 is slid towards the inflow port 7 so as to close the discharge port 8 and an open state where the valve 5 is slid away from the inflow port 7 so as to open the discharge port 8 in response to the pressure of the fluid applied to the valve 5. The biasing member 6 is configured so as to apply the biasing force to the valve 5 in a direction resisting against the fluid pressure applied to the valve 5 from the first port 11.

The relief valve 1 further includes a state switching mechanism 13. The state switching mechanism 13 includes a back pressure passage 14 and an oil switching valve (OSV) 15. The back pressure passage 14 is diverged from the supply passage 10 and is connected to a second passage 30, which is formed at, for example, a bottom portion of the valve body 2 so as to be positioned opposite from the first port 11 relative to the sleeve 4 and the valve 5 in a longitudinal direction thereof. The OSV 15 is provided on the back pressure passage 14 in order to allow and interrupt the fluid pressure applied via the first port 11 to be applied to the second passage 30.

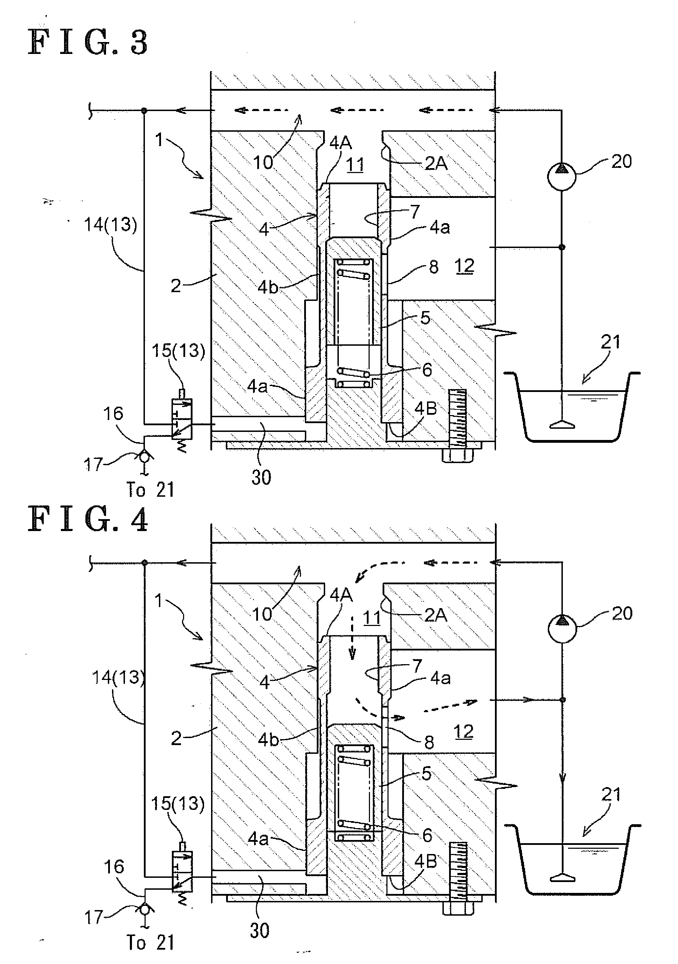

In a case were the OSV 15 is turned on, the state switching mechanism 13 is turned to be in a first state where the fluid flowing within the supply passage 10 is allowed to flow into the second passage 30 through the back pressure passage 14, so that the fluid pressure of the first port 11 is applied to the sleeve 4 in the direction resisting against the fluid pressure applied from the first port 11 (see Figs. 1 and 2). On the other hand, in a case where the OSV 15 is turned off, the state switching mechanism 13 is turned to be in a second state where the fluid flowing within the supply passage 10 is not allowed to flow into the second passage 30 through the back pressure passage 14, so that a communication is established between the second passage 30 and a drain passage 16 via the OSV 15 (see Figs. 3 and 4).

The sleeve 4 includes a first end surface 4A and a second end surface 4B. The first end surface 4A of the sleeve 4 faces the first port 11. On the other hand, the second end surface 4B of the sleeve 4 is positioned closer to the back pressure passage 14 of the state switching mechanism 13. A dimension of the second end surface 4B is set to be greater than a dimension of the first end surface 4A. Accordingly, in a case where the fluid pressure applied from the first port 11 acts in the second end surface 4B, a biasing force generated in response to the fluid pressure acting on the second end surface 4B becomes greater than a biasing force generated in response to the fluid pressure acting on the first surface 4A because of a difference between the dimensions of the first and second end surfaces 4A and 4B, so that the sleeve 4 is displaced towards the first port 11. Therefore, the sleeve 4 is displaced towards the first port 11 and towards the second port 12 in response to an actuation (turning on and turning off) of the OSV 15.

### [In a case where the relief valve is in a normally operated state]

In the case where the state switching mechanism 13 is in the first state, the fluid pressure applied from the first port 11 acts more on the sleeve 4 via the second passage 30 in the direction resisting against the fluid pressure applied on the sleeve 4 directly from the first port 11, so that the sleeve 4 is displaced towards the first port 11. A position of the discharge port 8 is also displaced towards the first port 11 in accordance with a displacement of the sleeve 4 towards the first port 11. Furthermore, because the valve 5 is also biased by the biasing member 6 together with the sleeve 4 so as to be positioned closer to the first port 11, the biasing member 6 turns to be in a stretched state. The biasing member 6 in the stretched state is easily pushed back towards the second passage 30. Therefore, even in a case where the fluid pressure within the supply passage 10 is low, the biasing member 6 may be pushed back towards the second passage 30, so that the valve 5 is displaced away from the inflow port 7 of the sleeve 4. Accordingly, the valve 5 establishes the open state where the discharge port 8 of the sleeve 4 is opened as illustrated in Fig. 2. As a result, a communication is established between the first port 11 and the second port 12, so that an excessive fluid (the oil) flows back to an intake port of the oil pump 20. In other words, in this case, a valve opening pressure of the relief valve 1 is set to be low.

On the other hand, in the case where the state switching mechanism 13 is in the second state, the fluid pressure applied from the first port 11 does not act on the sleeve 4 through the second passage 30 in the direction resisting against the fluid pressure applied to the sleeve 4 directly from the first port 11, so that a communication is established between the second passage 30 and the drain passage 16. Only the fluid pressure applied directly from the first port 11 acts on the sleeve 4 (i.e. the fluid pressure from the first port 11 through the second passage 30 does not act on the sleeve 4), so that the sleeve 4 is displaced towards the second port 12. The position of the discharge port 8 is also displaced away from the first port 11 in response to the displacement of the sleeve 4 towards the second port 12. Furthermore, because the valve 5 is also displaced towards the second port 12 together with the sleeve 4, the biasing member 6 is turned to be in a compressed state. The biasing member 6 in the compressed state is not easily pushed back towards the first port 11. Therefore, in the case where the fluid pressure within the supply passage 10 is low, the biasing member 6 is not likely to be pushed back towards the second passage 30, so that the closed state where the valve 5 closes the discharge port 8 of the sleeve 4 is maintained (see Fig. 3). In a case where the fluid pressure within the supply passage 10 becomes high, the biasing member 6 in the compressed state is pushed back towards the second passage 30 as illustrated in Fig. 4, so that the valve 5 is displaced away from the inflow port 7 of the sleeve 4. As a result, the valve 5 establishes the open state where the discharge port 8 of the sleeve 4 is opened. Accordingly, the communication is established between the first port 11 and the second port 12, so that the excessive oil (the oil) is allowed to flow back towards the intake port of the oil pump 20. In other words, in this case, the valve opening pressure of the relief valve 1 is set to be high.

As described above, in the case where the state switching mechanism 13 is in the second state, the fluid pressure applied from the first port 11 through the second port 30 does not act on the sleeve 4 in the direction resisting against the fluid pressure applied directly from the first port 11 on the sleeve 4, so that the communication is established between the second passage 30 and the drain passage 16. Accordingly, the sleeve 4 is displaced towards the first port 11. In this case, for example, if a discharge pressure of the oil pump 20 becomes small because of an excessive increase or an excessive decrease of a number of engine rotations, the sleeve 4 may be pushed up while receiving the biasing force generated by the biasing member 6, which may result in flowing the oil back through the drain passage 16. As a result, an object (a foreign object) and the like contained in the oil stored within the oil pan 21 may be sucked towards the sleeve 4 via the drain passage 16. Furthermore, in a case where the drain passage 16 opens towards the oil pan 21, air may be sucked towards the sleeve 4 via the drain passage 16, which may result in decreasing a discharge amount of the oil from the oil pump 20.

Therefore, the relief valve 1 according to the embodiment includes a check valve 17 on the drain passage 16 of the OSV 15. The check valve 17 allows the fluid to flow towards the drain passage 16 from the OSV 15 while not allowing the fluid to flow towards the OSV 15 through the drain passage 16.

Accordingly, in the case where the state switching mechanism 13 is in the second state, the object, the air and the like is surely avoided from entering into the OSV 15 or the sleeve 4 from the drain passage 16 even if the communication is established between the second passage 30 and the drain passage 16. Therefore, an optimal operating state of the sleeve 4, the valve 5 and the like may be maintained. Additionally, various type of a check valve may be adapted as the check valve 17, as long as the valve is configured so as not to allow the fluid to flow back from the drain passage 16 while the state switching mechanism 13 is in the second state. Alternatively, a control valve may be used as the check valve 17.

### [In a case where a malfunction occurs at the relief valve because of a clog of the back pressure passage and the like]

In a case where the back pressure passage 14 is clogged because of a sludge and the like while the engine is operated, the fluid flowing within the supply passage 10 is not allowed to flow towards the second passage 30 as in the case where the OSV 15 is in an off state (see Figs. 3 and 4) even if the OSV 15 is in an on state. In this case, the fluid pressure applied from the first port 11 through the second passage 30 does not act on the sleeve 4 in the direction resisting against the fluid pressure applied directly from the first port 11 on the sleeve 4. Accordingly, only the fluid pressure applied directly from the first port 11 acts on the sleeve 4 of the relief valve 1 (i.e. the fluid pressure is not applied to the sleeve 4 via the second passage 30), so that the sleeve 4 is positioned closer to the second port 12. As a result, the valve opening pressure is set to be high.

Accordingly, the relief valve 1 is configured so that the valve opening pressure thereof is set to be high in the case where the malfunction such as the clog of the back pressure passage 14 and the like occurs because of the sludge and the like. Therefore, in the case where the fluid pressure of the supply passage 10 is low, the valve 5 is maintained to be in the closed state, so that the oil is kept supplied to the engine. As a result, a malfunction such as a seizure of the engine, which occurs because the oil is not supplied to the engine, and the like may be preliminarily avoided.

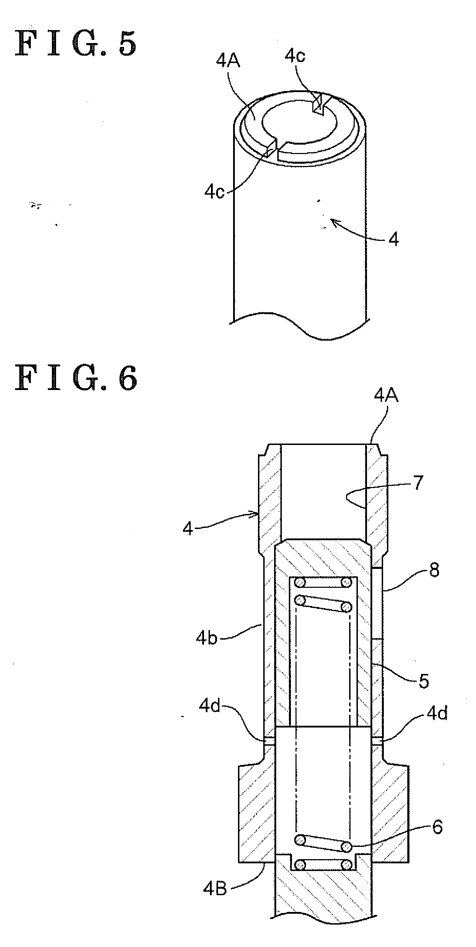

As illustrated in Fig. 5, the first end surface 4A of the sleeve 4 facing the first port 11 includes a flat radially-outer circumferential surface extending along an entire circumference of the sleeve 4, a flat radially-inner circumferential surface extending along the entire circumference of the sleeve 4 and positioned closer to the first port 11 when comparing to the outer circumferential surface, and an inclined surface continuously inclining in a direction where a diameter of the sleeve 4 decreases from the radially-outer circumferential surface to the radially-inner circumferential surface. Furthermore, two cut-out portions 4c are formed on the first end surface 4A so as to recess thereof from the radially-inner circumferential surface to the radially-outer circumferential surface. The first end surface 4A of the sleeve 4 contacts a sleeve contact surface 2A, which is formed at a portion of the valve body 2 positioned closer to the first port 11 of the valve body 2, while the sleeve 4 is positioned closer to the first port 11. In this case, a fluid passage to the radially-outer circumferential surface of the first end surface 4A is narrowed due to a close contact between the first end surface 4A and the sleeve contact surface 2A, so that the fluid flowing at the first port 11 may not be allowed to easily flow towards the radially-outer circumferential surface of the first end surface 4A. Hence, two cut-out portions 4c are formed at the first end surface 4A, so that the fluid is allowed to flow towards the entire radially-outer circumferential surface of the first end surface 4A via the cut-out portions 4c. Accordingly, the relief valve 1 is configured so that the fluid pressure from the first port 11 is applied even to the radially-outer circumferential surface of the first end surface 4A, so that the sleeve 4 is smoothly operated. Additionally, a number of the cut-out portion 4c is not limited to two. More specifically, one or more of the cut-out portion 4c may be formed at the first end surface 4A as long as the fluid pressure from the first port 11 is applied even to the radially-outer circumferential surface thereof.

As illustrated in Figs. 1 to 4, a slide surface 4a is formed at each end portion of an outer circumferential surface of the sleeve 4 in an axial direction thereof, so that the sleeve 4 slidably moves against the valve body 2 at the slide surfaces 4a. A portion of the outer circumferential surface 4b other than the slide surfaces 4a does not slide against the valve body 2. A position of the sleeve 4 is changed due to the fluid pressure applied from the first port 11. Therefore, a slide resistance of the sleeve 4 against the valve body 2 needs to be as small as possible. Hence, because the slide surfaces 4a are formed at the sleeve 4 in the vicinity of the end portions thereof in the axial direction, respectively, an area of the slide surface when the sleeve 4 slidably moves relative to the valve body 2 is reduced and an inclination of the sleeve 4 is limited to a minimum in order to reduce a friction force generated between the sleeve 4 and the valve body 2 as much as possible. Accordingly, the sleeve 4, which is provided within the valve body 2, is avoided from being inclined relative to an axial direction of the valve body 2 because of the slide surfaces 4a, so that the sleeve 4 is allowed to move between the first port 11 and the second port 12 within the valve body 2 while maintaining a posture thereof extending along the axial direction.

### [Other embodiments]

The relief valve 1 according to the embodiment may be modified so as to include a first communication bore 4d at the sleeve 4 (in this modification example, two first communication bores 4d are formed at the sleeve 4) in order to discharge the fluid or the air remaining within the sleeve 4 closer to the second passage 30 relative to the valve 5. In the case where the sleeve 4 is configured so as to include the first communication bores 4d, the first communication bores 4d are formed at, for example, the outer circumferential portion of the sleeve 4 positioned closer to the second passage 30 (see Fig. 6). In the case where the position of the sleeve 4 is changed by the state switching mechanism 13, a volume of the fluid or the air remaining closer to the second passage 30 relative to the valve 5 within the sleeve 4 increases and decreases. In this case, because the fluid or the air remaining closer to the second passage 30 within the sleeve 4 is discharged from the first communication bores 4d, the fluid is allowed to freely flow into and flow out from the sleeve 4, thereby reducing the resistance generated when the sleeve 4 is displaced. Additionally, a number of the first communication bores 4d is not limited to two. More specifically, one or more of the first communication bore 4d may be formed at the sleeve 4.

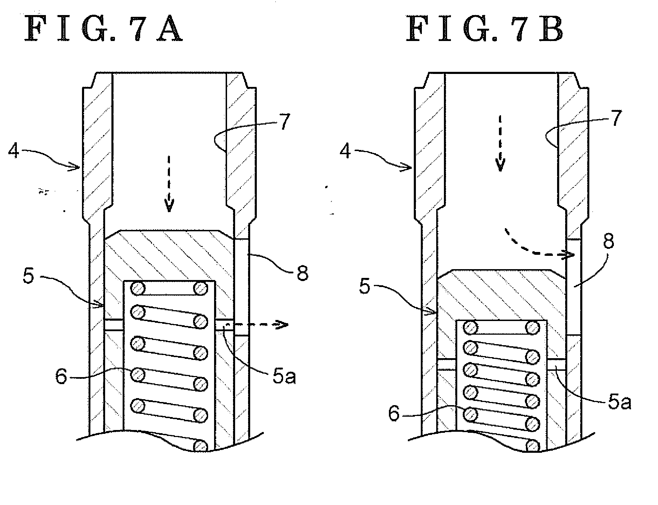

The relief valve 1 according to the embodiment may be modified so as to include a second communication bore 5a at the valve 5 (in this another modification example, two second communication bores 5a are formed at the valve 5) as illustrated in Figs. 7A and 7B in order to discharge the fluid or the air remaining closer to the second passage 30 relative to the valve 5 within the sleeve 4. In the case where the valve 5 is pushed down by the fluid pressure applied from the first port 11, the fluid or the air remaining closer to the second passage 30 generates the resistance. However, in the case where the relief valve 1 is configured so as to include the second communication bores 5a at the valve 5, the fluid or the air remaining closer to the second passage 30 within the sleeve 4 is discharged from the second communication bores 5a to the second port 12 via the discharge port 8 of the sleeve 4 in a process of the fluid pressure applied from the first port 11 pushing down the valve 5 (see Fig. 7A). Accordingly, the fluid remaining within the space of the sleeve 4 positioned closer to the second passage 30 is facilitated to be discharged via the discharge port 8, so that an operation of the valve 5 may be smoothened. In a case where the valve 5 is moved away from the inflow port 7 of the sleeve 4 so as to open the discharge port 8 (i.e. the open state) as illustrated in Fig. 7B, a communication between the second communication bores 5a and the discharge port 8 is interrupted. Additionally, a number of the second communication bores 5a is not limited to two. More specifically, one or more of the second communication bore 5a may be formed at the valve 5.

Accordingly, the relief valve 1, which is adaptable to various fluid pressure adjustment including a hydraulic pressure adjustment of an engine lubricating system, may be achieved.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A relief valve (1) comprising:
a valve body (2) having a first port (11), through which a fluid flowing through a first passage (10) flows into the relief valve (1), and a second port (12), through which the fluid is discharged from the relief valve (1);
a sleeve (4) formed in a cylinder shape, configured so as to be slidably movable within the valve body (2) and having an inflow port (7), which is in communication with the first port (11), and a discharge port (8), which is in communication with the second port (12);
a valve (5) configured so as to be slidably movable within the sleeve (4) while receiving a pressure of the fluid via the inflow port (7) and establishing a closed state, where the valve (5) is positioned closer to the inflow port (7) so as to close the discharge port (8), and an open state, where the valve (5) is positioned away from the inflow port (7) so as to open the discharge port (8);
a biasing member (6) applying a biasing force to the valve (5) in a direction resisting against a fluid pressure applied from the first port (11); and
a state switching mechanism (13) being switched between a first state, where the fluid pressure applied from the first port (11) acts on the sleeve (4) in the same direction as a direction where the biasing force is generated, and a second state, where a communication between a second passage (30), which is formed at a portion of the valve body (2) so as to be positioned opposite from the first port (11) of the sleeve (4) relative to the sleeve (4) and the valve (5) in a longitudinal direction thereof, and a drain passage (16) is established;
**characterized by**
a valve (17) provided at the drain passage (16) in order not to allow the fluid to flow back from the drain passage (16) while the state switching mechanism (13) is in the second state.

## Patentansprüche

1. Druckbegrenzungsventil (1) enthaltend:
einen Ventilkörper (2), der eine erste Öffnung (11) hat, durch die ein Fluid, das durch einen ersten Durchlass (10) strömt, in das Druckbegrenzungsventil (1) strömt, und eine zweite Öffnung (12), durch die das Fluid aus dem Druckbegrenzungsventil (1) abgegeben wird;
eine Hülse (4), die in einer Zylinderform geformt ist, die angepasst ist, dass sie verschiebbar innerhalb des Ventilkörpers (2) bewegbar ist, und eine Einströmöffnung (7), die in Verbindung mit der ersten Öffnung (11) ist, und eine Abgabeöffnung (8) aufweist, die in Verbindung mit der zweiten Öffnung (12) ist;
ein Ventil (5), das angepasst ist, dass es verschiebbar innerhalb der Hülse (4) bewegbar ist, wenn es einen Druck des Fluids über die Einströmöffnung (7) aufnimmt, und einen geschlossenen Zustand herstellt, in dem das Ventil (5) näher an der Einströmöffnung (7) positioniert ist, so dass es die Abgabeöffnung (8) schließt, und einen offenen Zustand herstellt, in dem das Ventil (5) weg von der Einströmöffnung (7) positioniert ist, so dass die Abgabeöffnung (8) geöffnet ist;
ein Vorbelastungselement (6), das eine Vorbelastungskraft auf das Ventil (5) in einer Richtung aufbring, die einem Fluiddruck, der von der ersten Öffnung (11) aus aufgebracht wird, entgegenwirkt; und
einen Zustandsumschaltmechanismus (13), der zwischen einem ersten Zustand, in dem der Fluiddruck, der von der ersten Öffnung (11) ausgehend aufgebracht wird, auf die Hülse (4) in der gleichen Richtung wie der Richtung, in der die Vorbelastungskraft erzeugt wird, wirkt, und einem zweiten Zustand, in dem eine Verbindung zwischen einem zweiten Durchlass (30), der an einem Bereich des Ventilkörpers (2) geformt ist, so dass er gegenüber der ersten Öffnung (11) der Hülse (4) relativ zu der Hülse (4) und dem Ventil (5) in einer Längsrichtung davon positioniert ist, und einem Abfi.ihrdurchlass (16) hergestellt wird, geschaltet wird;
**gekennzeichnet durch** ein Ventil (17), das an dem Abfiihrdurchlass (16) vorgesehen ist, damit nicht dem Fluid erlaubt wird, aus dem Abfiihrdurchlass (16) zurückzuströmen, wenn der Zustandsumschaltmechanismus (13) in dem zweiten Zustand ist.

## Revendications

1. Soupape de décompression (1) comprenant :
un corps (2) de soupape présentant un premier orifice (11) de soupape, à travers lequel un fluide, s'écoulant à travers un premier passage (10), s'écoule dans la soupape de décompression (1), et un deuxième orifice (12) de soupape, à travers lequel le fluide est déchargé de la soupape de décompression (1) ;
un manchon (4) formé dans une forme cylindrique, configuré de façon à être mobile de manière coulissante dans le corps (2) de soupape et présentant un orifice d'entrée (7), qui est en communication avec le premier orifice (11) de soupape, et un orifice de déchargement (8), qui est en communication avec le deuxième orifice (12) de soupape ;
une soupape (5) configurée de façon à être mobile de manière coulissante dans le manchon (4) tout en étant soumise à une pression du fluide depuis l'orifice d'entrée (7) et définissant un état fermé, dans lequel la soupape (5) est positionnée en plus près de l'orifice d'entrée (7) de façon à fermer l'orifice de déchargement (8), et un état ouvert où la soupape (5) est positionnée distante de l'orifice d'entrée (7) de façon à ouvrir l'orifice de déchargement (8) ;
un membre de biaisement (6) appliquant une force de biaisement sur la soupape (5) dans une direction de résistance contre une pression de fluide appliquée depuis le premier orifice (11) de soupape ; et
un mécanisme (13) de commutation d'état qui est commuté entre un premier état, dans lequel la pression du fluide appliquée depuis le premier orifice (11) de soupape agit sur le manchon (4) dans la même direction qu'une direction où la force de biaisement est générée, et un deuxième état, où une communication entre une deuxième passage (30), qui est formé sur une partie du corps (2) de soupape de sorte à être positionné à l'opposé du premier orifice (11) de soupape du manchon (4) par rapport au manchon (4) et à la soupape (5) dans une direction longitudinale de ces derniers, et un passage de drainage (16) est établie ;
**caractérisée par** une soupape (17) fournie sur le passage de drainage (16) afin de ne pas permettre au fluide de refouler depuis le passage de drainage (16) lorsque le mécanisme (13) de commutation d'état est dans le deuxième état.
